(19) Europäisches Patentamt
European Patent Office
Office européen des brevets

(11) EP 4 465 524 B1

(12) **EUROPEAN PATENT SPECIFICATION**

(45) Date of publication and mention of the grant of the patent:
**03.12.2025 Bulletin 2025/49**

(21) Application number: **24173974.7**

(22) Date of filing: **03.05.2024**

(51) International Patent Classification (IPC):
***H02P 29/66*** *(2016.01)*

(52) Cooperative Patent Classification (CPC):
**H02P 29/662**

(54) **SYSTEM FOR ESTIMATING TEMPERATURE OF PERMANENT MAGNET OF ROTOR OF MOTOR**

SYSTEM ZUR SCHÄTZUNG DER TEMPERATUR EINES PERMANENTMAGNETEN EINES MOTORROTORS

SYSTÈME D’ESTIMATION DE TEMPÉRATURE D’AIMANT PERMANENT DE ROTOR DE MOTEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.05.2023 KR 20230065204**

(43) Date of publication of application:
**20.11.2024 Bulletin 2024/47**

(73) Proprietor: **Hyundai Mobis Co., Ltd.**
**Gangnam-gu**
**Seoul 06141 (KR)**

(72) Inventors:
- **KIM, Sang Min**
  **Yongin-si, Gyeonggi-do 16905 (KR)**
- **SEO, Jin Qyu**
  **Yongin-si, Gyeonggi-do 17176 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**JP-A- 2006 254 521**
**JP-A- 2022 182 027**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 465 524 B1

## Description

BACKGROUND OF THE INVENTION

1. Field

The present invention relates to a system for estimating a temperature of a permanent magnet of a rotor of a motor, and more specifically, to a system for estimating a temperature of a permanent magnet of a rotor for a motor, which may monitor the temperature of the permanent magnet attached to the rotor of the motor in real time.

2. Description of the Related Art

In a motor, since the magnetic characteristics of a permanent magnet included in the motor change depending on a temperature, it is necessary to estimate a temperature of the permanent magnet. In order to accurately measure a temperature of a permanent magnet included in a rotor of the motor, a separate sensor and communication module are required, resulting in an increase in prices of the motor and an inverter, and thus a problem that the price competitiveness of a product is degraded occurs.

There are mainly three methods proposed to solve this problem: a method of assuming that a temperature of a stator coil and a temperature of a permanent magnet of a rotor are the same (hereinafter referred to as "first method"), a method of estimating a temperature of a permanent of a rotor by generating a three-dimensional magnetic flux map for a speed, torque, and temperature of the rotor of a motor (hereinafter referred to as "second method"), and a method of estimating a temperature of a permanent magnet using a thermal resistance of a motor and the characteristics of a cooling system (hereinafter referred to as "third method").

The first method among the above methods has a problem of low torque control precision because it is not based on the temperature of the permanent magnet of the rotor of the motor.

The second method has a problem that a temperature estimation error increases according to a change in battery voltage (or a direct-current high voltage) because it does not consider a magnetic flux change according to a voltage change in a high-voltage battery. In order to consider a change in battery voltage, a four-dimensional magnetic flux map should be generated or three or more sets of three-dimensional magnetic flux maps should be generated, which has a problem that many CPU memories are occupied and it takes much time to develop the magnetic flux map.

The third method may have the performance of the cooling system that changes according to a vehicle driving environment. When the performance of the cooling system changes, thermal resistances of a rotor and a stator of the motor varies depending on a flow rate of a cooling medium. In order to solve this problem, it is necessary to identify the heating amount of the motor and model copper and iron losses of the stator according to a torque and a speed, and there is a problem that a development time is excessively required. JP 2006 254521 A discloses a control device of a magnetic pole sensor-less synchronous machine. In the document it is described that an armature interlinkage magnetic flux operation part of a magnet temperature estimation part performs current-voltage mapping to a coordinated system displaced at an angle of $\Delta\theta$ between a control axis ($\gamma$-$\delta$ axis) and a magnet axis (d-q axis), the $\Delta\theta$ and an interlinkage magnetic flux amount $\Phi$ are dynamically changed, the armature interlinkage magnetic flux amount is operated and a magnet temperature is estimated from the ratio of the armature interlinkage magnetic flux amount and a reference armature interlinkage magnetic flux amount by a magnet temperature estimation operation part on the basis of the armature interlinkage magnetic flux amount, a carrier frequency is increased and a modulation system is changed by the magnet temperature automatic lowering operation of a non-reversible demagnetization determination part and by a demagnetization determination operation part, the temperature of the permanent magnet is lowered, a non-reversible demagnetized magnetism generation current obtained from a correlation table between the lowered temperature of the permanent magnet and a non-reversible demagnetized magnetism generation current and a non-reversible demagnetization mode current table value at the failure of an inverter are compared, and an alarm is outputted from an alarm output part. JP 2022 182027 A discloses a control circuit as a temperature estimation device for estimating a magnet temperature Tm of a permanent magnet provided by a rotor provided to a motor.

SUMMARY

The invention is defined by the appended claims.

BRIEF DESCRIPTION OF THE DRAWINGS

FIG. 1 is a flowchart of a system for estimating a temperature of a permanent magnet of a rotor of a motor according to a first embodiment of the present invention.

FIG. 2 is a block diagram of a magnetic flux map temperature estimation unit of the system for estimating the temperature of the permanent magnet of the rotor of the motor according to the first embodiment of the present invention.

FIG. 3 is a detailed block diagram of the magnetic flux map temperature estimation unit of the system for estimating the temperature of the permanent magnet of the rotor of the motor according to the first embodiment of the present invention.

FIG. 4 is a block diagram of a process of generating magnetic flux nonlinearity compensation value data of the system for estimating the temperature of the permanent magnet of the rotor of the motor according to the first embodiment of the present invention.

FIG. 5 is a block diagram of an energy map temperature estimation unit of the system for estimating the temperature of the permanent magnet of the rotor of the motor according to the first embodiment of the present invention.

FIG. 6 is a detailed block diagram of the energy map temperature estimation unit of the system for estimating the temperature of the permanent magnet of the rotor of the motor according to the first embodiment of the present invention.

FIG. 7 is a block diagram of a process of generating energy nonlinearity compensation value data of the system for estimating the temperature of the permanent magnet of the rotor of the motor according to the first embodiment of the present invention.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

DETAILED DESCRIPTION

FIG. 1 is a flowchart of a system for estimating a temperature of a permanent magnet of a rotor of a motor according to a first embodiment of the present invention.

As illustrated in FIG. 1, the system for estimating the temperature of the permanent magnet according to the first embodiment of the present invention first determines whether a rotational speed of the rotor included in the motor is greater than or equal to a reference speed. As illustrated in FIG. 1, $\omega_{rpm}$ denotes the rotational speed of the rotor, and $\omega_{rpm,co}$ denotes the reference speed. Comparison between magnitudes of $\omega_{rpm}$ and $\omega_{rpm,CO}$ in FIG. 1 is performed by a first determination unit (not illustrated) included in the present embodiment. To this end, the first determination unit may be implemented as an electronic element capable of calculation or device including the electronic element and may receive rotational speed command value information of the motor from a control device (e.g., an inverter) of the motor. Components to be described below other than the first determination unit may be implemented as the electronic element capable of calculation or device including the electronic element.

When $\omega_{rpm}$ is smaller than $\omega_{rpm,CO}$ in the first determination unit, in the present invention, it is determined that the temperature of the permanent magnet of the rotor included in the motor is the same as a temperature of a stator of the motor or temperature of a stator coil, and an estimation temperature of the permanent magnet is output by a permanent magnet temperature estimation unit (not illustrated) under a condition of $\omega_{rpm} < \omega_{rpm,CO}$.

When a condition of $\omega_{rpm} \geq \omega_{rpm,CO}$ is satisfied in the first determination unit, a second determination unit (not illustrated) included in the present embodiment determines whether a current flowing in a coil is smaller than a reference current and whether a magnitude of q-axis energy of the motor is smaller than reference energy. A current comparison is referred to as a first condition, and a magnitude comparison of the energy is referred to a second condition, in which the first condition can be expressed as $I_{mag} < I_{mag,CO}$, and the second condition can be expressed as $|E_Q| < E_{Q,CO}$. In this case, $I_{mag}$ denotes the current flowing in the coil, $I_{mag,CO}$ denotes the reference current, $E_Q$ denotes the q-axis energy, and $E_{Q,CO}$ denotes the reference energy. A subscript CO in $E_{Q,CO}$ means change over, meaning that it serves as a reference for converting a method of estimating the temperature of the permanent magnet. The reference energy may be q-axis reference energy. In the present embodiment, the reference current $I_{mag,CO}$ used as the first condition may be $(\frac{2}{1000}) \times \frac{V_{qs}}{R_s}$ ($V_{qs}$ denotes a q-axis voltage, and $R_s$ denotes a stator resistance), and $E_{Q,CO}$ used in the second condition may be 0.5 joule. However, the present invention does not limit $I_{mag,CO}$ and $E_{Q,CO}$ to the above specific values, and $I_{mag,CO}$ and $E_{Q,CO}$ may be changed as needed.

In the present embodiment, when at least one of the first condition and the second condition is satisfied in the second determination unit, an estimated temperature of the permanent magnet is output through a magnetic flux map temperature estimation unit, and when both the first condition and the second condition are not satisfied, in the present embodiment, the temperature of the permanent magnet is estimated and output through an energy map temperature estimation unit. This is to increase the accuracy of the estimated temperature of the permanent magnet, and since there is a disadvantage in that a method using a magnetic flux map has a large influence of a resistance change when a current increases, and there is a disadvantage in that a method using an energy map may not be used for temperature estimation when a current is zero, it is possible to increase accuracy by selecting any one of the two methods according to situations and estimating the temperature of the permanent magnet.

Hereinafter, a detailed method of estimating the temperature of the permanent magnet by the magnetic flux map temperature estimation unit among the magnetic flux map temperature estimation unit and the energy map temperature estimation unit will be first described.

FIG. 2 is a block diagram of a magnetic flux map temperature estimation unit of the system for estimating the temperature of the permanent magnet of the rotor of the motor according to the first embodiment of the present invention, and FIG. 3 is a detailed block diagram of the magnetic flux map temperature estimation unit of the system for estimating the temperature of the permanent magnet of the rotor of the motor according to the first embodiment of the present invention.

As illustrated in FIGS. 2 and 3, a magnetic flux map temperature estimation unit 1000 of the system of estimating the temperature of the permanent magnet of the rotor of the motor according to the first embodiment of the present invention includes a 1-1 storage unit (not illustrated), a 1-2 storage unit 110, a 1-1 calculation unit 120, and a 1-2 calculation unit 130.

The 1-1 storage unit stores data of a d-axis current, q-axis current, and d-axis magnetic flux flowing in the coil of the motor for each temperature acquired through a previously performed test.

The previously performed test for generating the data stored in the 1-1 storage unit will be described. First, the d-axis magnetic flux at this time while changing the temperature, the d-axis current, and the q-axis current is calculated. The calculated d-axis magnetic flux may be calculated using an equation below.

$$\lambda_d = \frac{V_{qs} - R_s I_{qs}}{\omega_r}$$

In the above equation, $\lambda_d$ denotes the d-axis magnetic flux, $V_{qs}$ denotes the q-axis voltage, $R_s$ denotes the stator resistance, $I_{qs}$ denotes the q-axis current, and $\omega_r$ denotes an electric angular speed (rad/s). When the test is performed using the above equation, magnetic flux data sets according to the d-axis current, q-axis current, and temperature are acquired.

When the d-axis current and q-axis current are fixed by processing the data stored in the 1-1 storage unit, the 1-2 storage unit 110 processes the data using a first-order equation of the d-axis magnetic flux to the temperature. When the d-axis current and q-axis current are fixed, the d-axis magnetic flux and temperature may have the linear relationship of the first-order equation, and the 1-2 storage units 110 may acquire data on a coefficient of a first-order term and a constant term in the first-order equation for each d-axis current and q-axis current. The coefficient of the first-order term of the first-order equation for each d-axis current and q-axis current can be expressed as $A_d$, and the constant term can be expressed as $B_d$.

When receiving a current command value in controlling the motor, the 1-1 calculation unit 120 outputs a first corrected magnetic flux using the data stored in the 1-2 storage unit 110 and an equation below.

$$\lambda_{d.Adj} = A_d T_{mag.Est} + B_d$$

(In the above equation, $\lambda_{d,Adj}$ denotes the first corrected magnetic flux, $A_d$ denotes the coefficient of the first-order term, $B_d$ denotes the constant term, and $T_{mag,Est}$ denotes the estimated temperature of the permanent magnet estimated immediately before by the 1-2 calculation unit).

More specifically, when $i^*_{dqs}$, which is the current command value used in controlling the motor, is input into the 1-2 storage unit 110, the 1-1 calculation unit 120 calculates and outputs the first corrected magnetic flux $\lambda_{d,Adj}$ by applying the current command values $i^*_{ds}$ and $i^*_{qs}$ and and $B_d$ corresponding to the temperature corresponding to $T_{mag,Est}$ output from the 1-2 calculation unit 130 among the data stored in the 1-2 storage unit 110 to the above equation and applying $T_{mag,Est}$ to the above equation.

$T_{mag,Est}$ used in the above equation denotes the estimated temperature of the permanent magnet estimated immediately before by the 1-2 calculation unit 130. This means that in the present invention, the magnetic flux map temperature estimation unit 1000 repeatedly outputs the estimated temperature of the permanent magnet.

The 1-2 calculation unit 130 is operated by using a signal output from the 1-1 calculation unit 120. Since the 1-1 calculation unit 120 uses an output signal of the 1-2 calculation unit 130, the 1-1 calculation unit 120 may be controlled in a closed loop.

The inverter has nonlinearity. Since the nonlinearity of the inverter causes a drop in a voltage and an ON/OFF switching delay of a power semiconductor and changes in magnetic flux and energy caused by a voltage change due to a dead time, the nonlinearity causes errors in estimating the temperature of the permanent magnet. In order to solve this problem, the 1-2 calculation unit 130 removes the errors from the first corrected magnetic flux.

For the above operation, the 1-2 calculation unit 130 includes a reference magnetic flux generator 131, a first compensation value storage 132, a first compensation applier 133, and a first integral controller 134 and a first temperature estimator 135.

The reference magnetic flux generator 131 receives the current command value, voltage command value (DC input voltage), and electric angular speed input into the motor and calculates a d-axis reference magnetic flux. In this case, the current command value can be expressed as $i^*_{dqs}$, the voltage command value can be expressed as $v^*_{dqs}$, the electric angular speed can be expressed as $\omega_r$, and the d-axis reference magnetic flux can be expressed as $\lambda_{d,Ref}$.

The first compensation value storage 132 stores magnetic flux nonlinearity compensation value data for each DC input voltage, rotational speed, and torque of the motor. The DC input voltage can be expressed as $v^*_{dqs}$ or $V_{dc}$, the rotational speed can be expressed as $\omega_{rpm}$, and the torque can be expressed as $T^*_e$. when the reference magnetic flux generator 131 receives $v^*_{dqs}$ or $V_{dc}$, $\omega_{rpm}$, and $T^*_e$, the first compensation value storage 132 outputs a magnetic flux compensation value corresponding to the input $v^*_{dqs}$ or $V_{dc}$, $\omega_{rpm}$, and $T^*_e$ among the data stored therein. In this case, the output magnetic flux nonlinearity compensation value is denoted by $\lambda_{d,NL}$.

The first compensation applier 133 subtracts $\lambda_{d,NL}$ from $\lambda_{d,Ref}$ and outputs a second corrected magnetic flux $\lambda^{NLC}_{d,Ref}$. The first compensation applier 133 subtracts $\lambda_{d,Adj}$, which is the first corrected magnetic flux output from the 1-1 calculation unit 120, from the second corrected magnetic flux $\lambda^{NLC}_{d,Ref}$ and outputs $\lambda^{NLC}_{d,Ref} - \lambda_{d,Adj}$.

The first integral controller 134 integrally controls $\lambda^{NLC}_{d,Ref} - \lambda_{d,Adj}$ output from the first compensation applier 133. The first integral controller sets a bandwidth of a closed-loop system to about a predetermined Hz. The bandwidth set by the first integral controller 134 may be set in consideration of a change rate of the temperature of the permanent magnet of the rotor.

The first temperature estimator 135 adds a temperature measured value of the coil of the motor to the output of the first integral controller 134 and outputs the estimated temperature of the permanent magnet. The temperature measured value of the coil of the motor can be expressed as $T_{Sttr}$, and the estimated temperature of the permanent magnet output from the first temperature estimator 135 can be expressed as $T_{mag,Est}$. $T_{mag,Est}$ output from the first temperature estimator 135 may be output toward the 1-1 calculation unit 120 included in the magnetic flux map temperature estimation unit 1000.

As illustrated in FIGS. 2 and 3, the 1-2 calculation unit 130 may further include a first output value limiter 136.

In the field of signal engineering, a low-pass filter and SR limiter are devices or circuits for limiting a speed (slew rate (SR)) at which a signal may change over time. In other words, the first output value limiter 136 serves to prevent distortion or other unwanted effects in the signal by preventing the input $T_{mag,Est}$ from exceeding a specific maximum change rate. The low-pass filter or SR limiter can be implemented in a method such as a diode or RC circuit.

The magnetic flux nonlinearity compensation value data stored in the first compensation value storage 132 will be described.

FIG. 4 is a block diagram of a process of generating magnetic flux nonlinearity compensation value data of the system for estimating the temperature of the permanent magnet of the rotor of the motor according to the first embodiment of the present invention.

The magnetic flux nonlinearity compensation value data may be obtained through the previously performed test, that is, a test performed offline. More specifically, as illustrated in FIG. 4, the magnetic flux nonlinearity compensation value data are generated by calculating a first d-axis magnetic flux according to the current command value $i^*_{dqs}$, voltage command value $v^*_{dqs}$, and electric angular speed $\omega_r$ input into the motor, and current command magnetic flux nonlinearity compensation value data input into the motor among the data stored in the 1-2 storage unit 110 may be obtained through the previously tested test, that is, the test performed offline. More specifically, as illustrated in FIG. 4, the magnetic flux nonlinearity compensation value data are generated by calculating the first d-axis magnetic flux according to the current command value $i_{dqs}^{*}$, voltage command value $v_{dqs}^{*}$, and electric angular speed $\omega_r$ input into the motor, and calculating a second d-axis magnetic flux by inputting a coefficient of the first-order term and constant term corresponding to the current command value $i_{dqs}^{*}$ input into the motor and $T_{mag,Meas}$, which is an actually measured temperature of the permanent magnet, into the first-order equation among the data stored in the 1-2 storage unit 110. Although the first d-axis magnetic flux and second d-axis magnetic flux calculated when the magnetic flux nonlinearity compensation value data is generated differ from the above-described d-axis reference magnetic flux and first corrected magnetic flux, the method of calculating each is the same, and thus the first d-axis magnetic flux is expressed as $\lambda_{d,Ref}$ and the second d-axis magnetic flux is expressed as $\lambda_{d,Adj}$. $T_{mag,Meas}$, which is the actually measured temperature of the permanent magnet, may be any one of the temperature information stored in the 1-2 storage unit 110. Then, the magnetic flux nonlinearity compensation value data $\lambda_{d,NL}$ are generated by subtracting the second d-axis magnetic flux from the first d-axis magnetic flux. As illustrated in FIG. 4, in order to calculate the first d-axis magnetic flux, the input current command value $i_{dqs}^{*}$ is generated by being converted by a magnetic flux weakening control unit 10 receiving $T_e^{*}$, which is a torque command value of the motor, the DC voltage $V_{dc}$, and the rotational speed $\omega_{rpm}$. Therefore, the magnetic flux nonlinearity compensation value data may be obtained for each torque command value, DC voltage, and rotational speed. In the present embodiment, in the case of the DC voltage, the magnetic flux nonlinearity compensation value data for each voltage value is not acquired, but the nonlinearity compensation value data may be acquired at a minimum DC voltage $V_{DC_min}$, a maximum DC voltage $V_{DC_max}$, and middle DC voltage $V_{DC_mid}$.

Hereinafter, an operation of an energy map temperature estimation unit 2000 will be described.

FIG. 5 is a block diagram of an energy map temperature estimation unit of the system for estimating the temperature of the permanent magnet of the rotor of the motor according to the first embodiment of the present invention, and FIG. 6 is a detailed block diagram of the energy map temperature estimation unit of the system for estimating the temperature of the permanent magnet of the rotor of the motor according to the first embodiment of the present invention.

As illustrated in FIGS. 5 and 6, the energy map temperature estimation unit 2000 of the system of estimating the temperature of the permanent magnet of the rotor of the motor according to the first embodiment of the present invention estimates the temperature of the permanent magnet using a q-axis energy map of the motor when any of the first condition and the second condition is not satisfied in the second determination unit. As illustrated in FIGS. 5 and 6, the energy map temperature estimation unit 2000 includes a 2-1 storage unit (not illustrated), a 2-2 storage unit 210, a 2-1 calculation unit 220, and a 2-2 calculation unit 230.

The 2-1 storage unit stores data of a d-axis current, q-axis current, and q-axis energy flowing in the coil of the motor for each temperature acquired through a previously performed test.

The previously performed test for generating the data stored in the 2-1 storage unit will be described. First, the q-axis energy at this time while changing the temperature, the d-axis current, and the q-axis current is calculated. The q-axis energy may be calculated using an equation below.

$$E_q = \frac{V_{qs}I_{ds} - V_{ds}I_{qs}}{\omega_r}$$

In the above equation, $E_q$ denotes the q-axis energy, $V_{qs}$ denotes the q-axis voltage, $R_s$ denotes the stator resistance, $I_{qs}$ denotes the q-axis current, and $\omega_r$ denotes an electric angular speed (rad/s). When the test is performed using the above equation, data sets of the q-axis energy according to the d-axis current, q-axis current, and temperature are acquired.

When the d-axis current and q-axis current are fixed by processing the data stored in the 2-1 storage unit, the 2-2 storage unit 210 processes the data using a second-order equation of the q-axis energy to the temperature. When the d-axis current and q-axis current are fixed, the q-axis energy and temperature may have the linear relationship of the second-order equation, and the 2-2 storage units 210 may acquire data on a coefficient of a second-order term, a coefficient of a first-order term, and a constant term in the second-order equation for each d-axis current and q-axis current. The coefficient of the second-order term of the second-order equation for each d-axis current and q-axis current can be expressed as $A_e$, the coefficient of the first-order term can be expressed as $B_e$, and the coefficient of the constant term can be expressed as $C_e$.

The 2-1 calculation unit 220 outputs first corrected energy using the data stored in the 2-2 storage unit 210 and an equation below.

$$E_{q.Adj} = A_e T_{mag,Est}^2 + B_e T_{mag,Est} + C_e$$

(In the above equation, $E_{q,Adj}$ denotes the first corrected energy, $A_e$ denotes the coefficient of the second-order term, $B_e$ denotes the coefficient of the first-order term, $C_e$ denotes the constant term, and $T_{mag,Est}$ denotes the estimated temperature of the permanent magnet estimated immediately before by the 2-2 calculation unit).

$T_{mag,Est}$ used in the above equation denotes the estimated temperature of the permanent magnet estimated immediately before by the 2-2 calculation unit 230. This means that in the present invention, the energy map temperature estimation unit 2000 repeatedly outputs the estimated temperature of the permanent magnet.

The 2-2 calculation unit 230 is operated by using a signal output from the 2-1 calculation unit 220. Since the 2-1 calculation unit 220 uses an output signal of the 2-2 calculation unit 230, the 2-1 calculation unit 220 may be controlled in a closed loop.

Like the above description of the magnetic flux map temperature estimation unit 1000, errors are included in the first corrected energy output from the 2-1 calculation unit 220. The 2-2 calculation unit 230 removes the errors from the first corrected energy output from the 2-1 calculation unit 220.

For the above operation, the 2-2 calculation unit 230 includes a reference energy generator 231, a second compensation value storage 232, a second compensation applier 233, and a second integral controller 234 and a second temperature estimator 235.

The reference energy generator 231 receives the current command value, voltage command value, and electric angular speed input into the motor and calculates q-axis reference energy. In this case, the current command value can be expressed as $i_{dqs}^*$, the voltage command value can be expressed as $v_{dqs}^*$, the speed can be expressed as $\omega_r$, and the q-axis reference energy can be expressed as $E_{q,Ref}$.

The second compensation value storage 232 stores energy nonlinearity compensation value data for each DC input voltage, rotational speed, and torque of the motor. The DC input voltage can be expressed as $V_{dc}$, the rotational speed can be expressed as $\omega_{rpm}$, and the torque can be expressed as $T_e^*$. When receiving $V_{dc}$, $\omega_{rpm}$, and $T_e^*$, the second compensation value storage 232 outputs energy nonlinearity compensation value corresponding to the input $V_{dc}$, $\omega_{rpm}$, and $T_e^*$ among the data stored therein. In this case, the energy nonlinearity compensation value is $E_{q,NL}$.

The second compensation applier 233 subtracts $E_{q,NL}$ from $E_{q,Ref}$ and outputs a second corrected magnetic flux

$$E_{q,Ref}^{NLC}.$$

The second compensation applier 233 subtracts $E_{q,Adj}$, which is the first corrected energy output from the energy map temperature estimation unit 2000, from the second corrected energy $E_{q,Ref}^{NLC}$ and outputs $E_{q,Ref}^{NLC} - E_{q.Adj}$.

The second integral controller 234 integrally controls $E_{q,Ref}^{NLC} - E_{q.Adj}$ output from the second compensation applier 233. The second integral controller sets a bandwidth of a closed-loop system to about a predetermined Hz. The bandwidth set by the second integral controller 234 may be set in consideration of a change rate of the temperature of the permanent magnet of the rotor.

The second temperature estimator 235 adds a temperature measured value of the coil of the motor to the output of the second integral controller 234 and outputs the estimated temperature of the permanent magnet. The temperature measured value of the coil of the motor can be expressed as $T_{Sttr}$, and the estimated temperature of the permanent magnet output from the second temperature estimator 235 can be expressed as $T_{mag,Est}$. $T_{mag,Est}$ output from the second temperature estimator 235 may be output toward the 2-1 calculation unit 220 included in the energy map temperature estimation unit 2000.

The 2-2 calculation unit 230 may further include a second output value limiter 236.

The second output value limiter 236 can be implemented as a low-pass filter (LPF) or SR limiter. In the field of signal engineering, a low-pass filter and SR limiter are devices or circuits for limiting a speed (slew rate (SR)) at which a signal may change over time. In other words, the second output value limiter 236 serves to prevent distortion or other unwanted effects in the signal by preventing the input $T_{mag,Est}$ from exceeding a specific maximum change rate. The low-pass filter or SR limiter can be implemented in a method such as a diode or RC circuit.

The energy nonlinearity compensation value data stored in the second compensation value storage 232 will be described.

FIG. 7 is a block diagram of a process of generating energy nonlinearity compensation value data of the system for estimating the temperature of the permanent magnet of the rotor of the motor according to the first embodiment of the present invention.

The energy nonlinearity compensation value data may be obtained through the previously tested test, that is, a test performed offline. More specifically, as illustrated in FIG. 7, the energy nonlinearity compensation value data is generated by calculating first d-axis energy according to the current command value $i_{dqs}^{*}$ , voltage command value $v_{dqs}^{*}$ , and electric angular speed $\omega_r$ input into the motor, and calculating second q-axis energy by inputting a coefficient of the second-order term, coefficient of the first-order term, and constant term corresponding to the current command value $i_{dqs}^{*}$ input into the motor and $T_{mag,Meas}$, which is an actually measured temperature of the permanent magnet, into the second-order equation. Although the first q-axis energy and second q-axis energy calculated when the energy nonlinearity compensation value data is generated differ from the above-described d-axis reference energy and first corrected energy, the method of calculating each is the same, and thus the first q-axis energy is expressed as $E_{q,Ref}$ and the second d-axis magnetic flux is expressed as $E_{q,Adj}$. $T_{mag,Meas}$, which is the actually measured temperature of the permanent magnet, may be any one of the temperature information stored in the 2-2 storage unit 210. Then, the energy nonlinearity compensation value data $E_{q,NL}$ are generated by subtracting the second q-axis energy from the first q-axis energy. As illustrated in FIG. 5, in order to calculate the first q-axis energy, the input current command value $i_{dqs}^{*}$ is generated by being converted by a magnetic flux weakening control unit 10 receiving $T_e^{*}$ , which is a torque command value of the motor, the DC voltage $V_{dc}$, and the rotational speed $\omega_{rpm}$. Therefore, the energy nonlinearity compensation value data may be obtained for each torque command value, DC voltage, and rotational speed. In the present embodiment, in the case of the DC voltage, the magnetic flux nonlinearity compensation value data for each voltage value is not acquired, but the nonlinearity compensation value data may be acquired at a minimum DC voltage $V_{DC_min}$, a maximum DC voltage $V_{DC_max}$, and middle DC voltage $V_{DC_mid}$.

The system for estimating the temperature of the permanent magnet of the rotor of the motor according to the present invention may be continuously performed during operation. In other words, the system does not end with estimating the temperature of the permanent magnet of the rotor once, but determines a condition in each of the first determination unit and the second determination unit and then estimates the temperature of the permanent magnet of the rotor in a different manner as the condition changes.

As described above, according to the present invention, by estimating the temperature of the permanent magnet using the temperature of the stator coil, estimating the temperature of the permanent magnet using the magnetic flux map, or estimating the temperature of the permanent magnet using the energy map according to the conditions, it is possible to increase the temperature estimation accuracy of the permanent magnet. When the system such as the system of the present invention is applied, it is possible to prevent the degradation in the performance of the motor by controlling the temperature of the permanent magnet to 180 to 200 °C or lower to prevent the permanent magnet from entering a high temperature at which irreversible demagnetization occurs. In addition, when this system is applied to electric vehicles, it is possible to increase driving distances of the electric vehicles by reducing a loss of a cooling system of the vehicle, and improve the efficiency of the entirety of the vehicle by reducing coolant or a flow rate of the coolant.

As described above, among the components included in the magnetic flux map temperature estimation unit 1000 and the energy map temperature estimation unit 2000, there are some functionally identical components. Describing this in pair, there are the first integral controller 134 and the second integral controller 234, the first temperature estimator 135 and the second temperature estimator 235, the first output value limiter 136, and the second output value limiter 236. As described above, the functionally identical components can be implemented as the same device. Among the above pairs, the first integral controller 134 and the second integral controller 234 are positioned at a frontmost end in a signal processing direction. When the first integral controller 134 and the second integral controller 234 are implemented as the same device and are referred to as the first integral controller 134, there may also be provided an embodiment in which a change-over switch is provided between the first integral controller 134 and the first compensation applier 133 and between the first integral controller 134 and the second compensation applier 233 to connect the first integral controller 134 to the first compensation applier 133 when the magnetic flux map temperature estimating method is used or connect the first integral controller 134 to the second compensation applier 233 when the energy map temperature estimating method is used.

According to the system for estimating the temperature of the permanent magnet of the rotor of the motor according to the present invention, by monitoring the temperature of the permanent magnet in real time, it is possible to prevent degradation the performance of the permanent magnet due to the high temperature and improve the output torque control precision and efficiency of the motor.

## Claims

1. A system for estimating a temperature of a permanent magnet of a rotor of a motor, **characterized in that** :

   a first determination unit configured to determine whether a rotational speed of the rotor is greater than or equal to a reference speed;
   a second determination unit configured to determine, when the rotational speed is greater than or equal to the reference speed, a first condition, the first condition being whether a current flowing in a coil included in the motor is less than a reference current, and a second condition, the second condition being whether a magnitude of q-axis energy of the motor is less than a reference energy magnitude;
   a magnetic flux map temperature estimation unit (1000) configured to estimate the temperature of the permanent magnet included in the rotor using a d-axis magnetic flux map of the motor responsive to one or more of the first condition and the second condition is satisfied in the second determination unit; and
   an energy map temperature estimation unit (2000) configured to estimate the temperature of the permanent magnet using a q-axis energy map of the motor responsive to one or more of the first condition and the second condition not being satisfied in the second determination unit,
   wherein the q-axis energy is calculated by

$$E_q = \frac{V_{qs} I_{ds} - V_{ds} I_{qs}}{\omega_r}$$

,

   where $E_q$ denotes the q-axis energy, $V_{qs}$ denotes a q-axis voltage, $R_s$ denotes a stator resistance, $I_{qs}$ denotes a q-axis current, and $\omega_r$ denotes an electric angular speed (rad/s).

2. The system of claim 1, wherein the magnetic flux map temperature estimation unit (1000) comprises:

   a first storage unit configured to store data on a d-axis current, q-axis current, and d-axis magnetic flux flowing in the coil of the motor for each temperature acquired through a previously performed test;
   a second storage unit configured to process the data stored in the first storage unit using a first-order equation of the d-axis magnetic flux to the temperature for each d-axis current and q-axis current, and to calculate data on a coefficient of a first-order term and a constant term for each d-axis current and q-axis current of the first-order equation;
   a first calculation unit (120) configured to calculate a first corrected magnetic flux using the data stored in the second storage unit and an equation below; and
   a second calculation unit (130) configured to remove errors from the first corrected magnetic flux and to calculate the estimated temperature of the permanent magnet, and
   when receiving a current command value of the motor, the first calculation unit (120) inputs a coefficient of the first-order term and a constant term corresponding to the current command value and an estimated temperature of the permanent magnet estimated before by the second calculation unit (130) among the data stored in the second storage unit into the equation,

$$A_{d.Adj} = A_d T_{mag,Est} + B_d$$

   wherein, $A_{d,Adj}$ denotes the first corrected magnetic flux, $A_d$ denotes the coefficient of the first-order term, $B_d$ denotes the constant term, and $T_{mag,Est}$ denotes the estimated temperature of the permanent magnet estimated before by the second calculation unit (130).

3. The system of claim 2, wherein the second calculation unit (130) comprises:

   a reference magnetic flux generator (131) configured to calculate a d-axis reference magnetic flux according to the current command value, a voltage command value, and an electric angular speed input into the motor;
   a first compensation value storage unit (132) configured to store magnetic flux nonlinearity compensation value data for each DC input voltage, rotational speed, and torque of the motor and calculate a magnetic flux nonlinearity compensation value according to the DC input voltage, the rotational speed, and the torque of the motor;

a first compensation applier (133) configured to generate a second corrected magnetic flux by subtracting the magnetic flux nonlinearity compensation value from the d-axis reference magnetic flux and the first corrected magnetic flux;
a first integral controller (134) configured to receive and integrally control a value received from the first compensation applier (133); and
a first temperature estimator configured to add a temperature measured value of the coil of the motor to an output of the first integral controller (133) and to calculate the estimated temperature of the permanent magnet.

**4.** The system of claim 3, wherein the second calculation unit (130) further comprises a first output value limiter (136) configured to filter the estimated temperature of the permanent magnet from the first temperature estimator or calculate the estimated temperature of the permanent magnet by limiting a change rate of the estimated temperature of the permanent magnet.

**5.** The system of claim 3 or 4, wherein a calculation of the magnetic flux nonlinearity compensation value data comprises:

calculating a first d-axis magnetic flux according to the current command value, the voltage command value, and the electric angular speed input into the motor through a previously performed test;
calculating a second d-axis magnetic flux by inputting an actually measured temperature of the permanent magnet into the first-order equation and inputting a coefficient of the first-order term and the constant term according to the d-axis current and q-axis current according to the current command value input into the motor and the actually measured temperature of the permanent magnet among the data stored in the second storage unit; and
subtracting the second d-axis magnetic flux from the first d-axis magnetic flux.

**6.** The system of any one of claims 1 to 5, wherein the energy map temperature estimation unit (2000) comprises:

a third storage unit in which data on a d-axis current, q-axis current, and q-axis energy flowing in the coil of the motor for each temperature from a previously performed test is stored;
a fourth storage unit (210) configured to process the data stored in the third storage unit using a second-order equation of the q-axis energy to the temperature for each d-axis current and q-axis current, and to generate and store data on a coefficient of a second-order term, a coefficient of a first-order term, and a constant term for each d-axis current and q-axis current of the second-order equation;
a third calculation unit (220) configured to calculate a first corrected energy value using the data stored in the fourth storage unit (210) and an equation below;
a fourth calculation unit (230) configured to remove errors from the first corrected energy value and then calculate the estimated temperature of the permanent magnet, and
when receiving a current command value of the motor, the third calculation unit (220) inputs a coefficient of the second-order term, a coefficient of the first-order term, and a constant term corresponding to the current command value and an estimated temperature of the permanent magnet estimated before by the fourth calculation unit (230) among the data stored in the fourth storage unit (210) into the equation,

$$E_{q.Adj} = A_e T_{mag,Est}^2 + B_e T_{mag,Est} + C_e$$

wherein $E_{q,Adj}$ denotes the first corrected energy, $A_e$ denotes the coefficient of the second-order term, $B_e$ denotes the coefficient of the first-order term, $C_e$ denotes the constant term, and $T_{mag,Est}$ denotes the estimated temperature of the permanent magnet estimated before by the fourth calculation unit (230).

**7.** The system of claim 6, wherein the fourth calculation unit (230) comprises:

a reference energy generator (231) configured to calculate a q-axis reference energy according to the current command value, a voltage command value, and a speed input into the motor;
a second compensation value storage (232) configured to store energy nonlinearity compensation value data for each DC input voltage, rotational speed, and torque of the motor and calculate an energy nonlinearity compensation value according to the DC input voltage, the rotational speed, and the torque of the motor;
a second compensation applier (233) configured to generate second corrected energy by subtracting the energy nonlinearity compensation value from the q-axis reference energy and output the first corrected energy from the second corrected energy;

a second integral controller configured to receive and integrally control an output value of the second compensation applier (233); and

a second temperature estimator (235) configured to add a temperature measured value of the coil of the motor to an output of the second integral controller and calculate the estimated temperature of the permanent magnet.

**8.** The system of claim 7, wherein the fourth calculation unit (230) further comprises a second output value limiter (236) configured to receive and filter the estimated temperature of the permanent magnet output from the second temperature estimator (235) or to calculate the estimated temperature of the permanent magnet by limiting a change rate of the estimated temperature of the permanent magnet.

**9.** The system of claim 7 or 8, wherein a calculation of the energy nonlinearity compensation value data comprises:

calculating first q-axis energy according to the current command value, the voltage command value, and the electric angular speed input into the motor through a previously performed test;

calculating second q-axis energy by inputting an actually measured temperature of the permanent magnet into the second-order equation and inputting a coefficient of the second-order term, a coefficient of the first-order term, and the constant term according to the d-axis current and q-axis current according to the current command value input into the motor and the actually measured temperature of the permanent magnet among the data stored in the fourth storage unit (210); and

subtracting the second q-axis energy from the first q-axis energy.

**10.** The system of any one of claims 1 to 9, comprising a basic permanent magnet temperature estimator configured to calculate a temperature measured value of a stator coil of the motor as the estimated temperature of the permanent magnet when the rotational speed of the rotor included in the motor is lower than the reference speed.

**Patentansprüche**

**1.** System zur Schätzung einer Temperatur eines Permanentmagneten eines Rotors eines Motors, **dadurch gekennzeichnet, dass** es umfasst:

eine erste Bestimmungseinheit, die dazu eingerichtet ist, zu bestimmen, ob eine Drehzahl des Rotors größer oder gleich einer Referenzdrehzahl ist;

eine zweite Bestimmungseinheit, die dazu eingerichtet ist, eine erste Bedingung zu bestimmen, wenn die Drehzahl größer oder gleich der Referenzdrehzahl ist, wobei die erste Bedingung darin besteht, ob ein in einer im Motor enthaltenen Spule fließender Strom kleiner als ein Referenzstrom ist, und eine zweite Bedingung zu bestimmen, wobei die zweite Bedingung darin besteht, ob ein Betrag einer q-Achsen-Energie des Motors kleiner als ein Referenzenergiebetrag ist;

eine Magnetflusskarten-Temperaturschätzeinheit (1000), die dazu eingerichtet ist, die Temperatur des im Rotor enthaltenen Permanentmagneten unter Verwendung einer d-Achsen-Magnetflusskarte des Motors zu schätzen, wenn in der zweiten Bestimmungseinheit die erste Bedingung und/oder die zweite Bedingung erfüllt sind; und

eine Energiekarten-Temperaturschätzeinheit (2000), die dazu eingerichtet ist, die Temperatur des Permanentmagneten unter Verwendung einer q-Achsen-Energiekarte des Motors zu schätzen, wenn in der zweiten Bestimmungseinheit die erste Bedingung und/oder die zweite Bedingung nicht erfüllt sind,

wobei die q-Achsen-Energie berechnet wird durch

$$E_q = \frac{V_{qs}I_{ds} - V_{ds}I_{qs}}{\omega_r}$$

wobei $E_q$ die q-Achsen-Energie bezeichnet, $V_{qs}$ eine q-Achsen-Spannung bezeichnet, $R_s$ einen Statorwiderstand bezeichnet, $I_{qs}$ einen q-Achsen-Strom bezeichnet und $\omega_r$ eine elektrische Winkelgeschwindigkeit (rad/s) bezeichnet.

**2.** System nach Anspruch 1, wobei die Magnetflusskarten-Temperaturschätzeinheit (1000) Folgendes umfasst:

eine erste Speichereinheit, die dazu eingerichtet ist, durch einen zuvor durchgeführten Test für jede Temperatur erfasste Daten über einen d-Achsen-Strom, einen q-Achsen-Strom und einen d-Achsen-Magnetfluss, die in der Spule des Motors fließen, zu speichern;
eine zweite Speichereinheit, die dazu eingerichtet ist, die in der ersten Speichereinheit gespeicherten Daten unter Verwendung einer Gleichung erster Ordnung des d-Achsen-Magnetflusses zur Temperatur für jeden d-Achsen-Strom und q-Achsen-Strom zu verarbeiten und Daten zu einem Koeffizienten eines Terms erster Ordnung und eines konstanten Terms für jeden d-Achsen-Strom und q-Achsen-Strom der Gleichung erster Ordnung zu berechnen;
eine erste Berechnungseinheit (120), die dazu eingerichtet ist, einen ersten korrigierten Magnetfluss unter Verwendung der in der zweiten Speichereinheit gespeicherten Daten und einer nachstehenden Gleichung zu berechnen; und
eine zweite Berechnungseinheit (130), die dazu eingerichtet ist, Fehler aus dem ersten korrigierten Magnetfluss zu entfernen und die geschätzte Temperatur des Permanentmagneten zu berechnen, und
wobei die erste Berechnungseinheit (120), wenn ein Stromsollwert des Motors empfangen wird, einen Koeffizienten des Terms erster Ordnung und einen konstanten Term entsprechend dem Stromsollwert und einer zuvor von der zweiten Berechnungseinheit (130) geschätzten Temperatur des Permanentmagneten aus den in der zweiten Speichereinheit gespeicherten Daten in die Gleichung eingibt,

$$A_{d.Adj} = A_d T_{mag,Est} + B_d$$

wobei $A_{d.Adj}$ den ersten korrigierten Magnetfluss bezeichnet, $A_d$ den Koeffizienten des Terms erster Ordnung bezeichnet, $B_d$ den konstanten Term bezeichnet und $T_{mag,Est}$ die geschätzte Temperatur des Permanentmagneten bezeichnet, die zuvor von der zweiten Berechnungseinheit (130) geschätzt wurde.

**3.** System nach Anspruch 2, wobei die zweite Berechnungseinheit (130) umfasst:

einen Referenzmagnetflussgenerator (131), der dazu eingerichtet ist, einen d-Achsen-Referenzmagnetfluss entsprechend dem Stromsollwert, einem Spannungssollwert und einer in den Motor eingegebenen elektrischen Winkelgeschwindigkeit zu berechnen;
eine erste Kompensationswertspeichereinheit (132), die dazu eingerichtet ist, Daten zu Kompensationswerten der Magnetfluss-Nichtlinearität für jede DC-Eingangsspannung, Drehzahl und jedes Drehmoment des Motors zu speichern und einen Kompensationswert der Magnetfluss-Nichtlinearität entsprechend der DC-Eingangsspannung, der Drehzahl und dem Drehmoment des Motors zu berechnen;
eine erste Kompensationsanwendungseinrichtung (133), die dazu eingerichtet ist, einen zweiten korrigierten Magnetfluss durch Subtrahieren des Kompensationswerts der Magnetfluss-Nichtlinearität vom d-Achsen-Referenzmagnetfluss und dem ersten korrigierten Magnetfluss zu erzeugen;
einen ersten Integralregler (134), der dazu eingerichtet ist, einen von der ersten Kompensationsanwendungseinrichtung (133) empfangenen Wert zu empfangen und integral zu regeln; und
eine erste Temperaturschätzeinrichtung, die dazu eingerichtet ist, einen Temperaturmesswert der Spule des Motors zu einem Ausgang des ersten Integralreglers (134) hinzuzufügen und die geschätzte Temperatur des Permanentmagneten zu berechnen.

**4.** System nach Anspruch 3, wobei die zweite Berechnungseinheit (130) ferner einen ersten Ausgangswertbegrenzer (136) umfasst, der dazu eingerichtet ist, die geschätzte Temperatur des Permanentmagneten von der ersten Temperaturschätzeinrichtung zu filtern oder die geschätzte Temperatur des Permanentmagneten durch Begrenzen einer Änderungsrate der geschätzten Temperatur des Permanentmagneten zu berechnen.

**5.** System nach Anspruch 3 oder 4, wobei eine Berechnung der Daten zu Kompensationswerten der Magnetfluss-Nichtlinearität Folgendes umfasst:

Berechnen eines ersten d-Achsen-Magnetflusses entsprechend dem Stromsollwert, dem Spannungssollwert und der durch einen zuvor durchgeführten Test in den Motor eingegebenen elektrischen Winkelgeschwindigkeit;
Berechnen eines zweiten d-Achsen-Magnetflusses durch Eingeben einer tatsächlich gemessenen Temperatur des Permanentmagneten in die Gleichung erster Ordnung und Eingeben eines Koeffizienten des Terms erster Ordnung und des konstanten Terms entsprechend dem d-Achsen-Strom und dem q-Achsen-Strom entsprechend dem in den Motor eingegebenen Stromsollwert und der tatsächlich gemessenen Temperatur des Permanentmagneten aus den in der zweiten Speichereinheit gespeicherten Daten; und
Subtrahieren des zweiten d-Achsen-Magnetflusses vom ersten d-Achsen-Magnetfluss.

**6.** System nach einem der Ansprüche 1 bis 5, wobei die Energiekarten-Temperaturschätzeinheit (2000) umfasst:

eine dritte Speichereinheit, in der Daten zu einem d-Achsen-Strom, einem q-Achsen-Strom und einer q-Achsen-Energie, die in der Spule des Motors für jede Temperatur fließen, aus einem zuvor durchgeführten Test gespeichert sind;
eine vierte Speichereinheit (210), die dazu eingerichtet ist, die in der dritten Speichereinheit gespeicherten Daten unter Verwendung einer Gleichung zweiter Ordnung der q-Achsen-Energie zur Temperatur für jeden d-Achsen-Strom und q-Achsen-Strom zu verarbeiten und Daten über einen Koeffizienten eines Terms zweiter Ordnung, einen Koeffizienten eines Terms erster Ordnung und einen konstanten Term für jeden d-Achsen-Strom und q-Achsen-Strom der Gleichung zweiter Ordnung zu erzeugen und zu speichern;
eine dritte Berechnungseinheit (220), die dazu eingerichtet ist, einen ersten korrigierten Energiewert unter Verwendung der in der vierten Speichereinheit (210) gespeicherten Daten und einer nachstehenden Gleichung zu berechnen;
eine vierte Berechnungseinheit (230), die dazu eingerichtet ist, Fehler aus dem ersten korrigierten Energiewert zu entfernen und dann die geschätzte Temperatur des Permanentmagneten zu berechnen, und
wobei die dritte Berechnungseinheit (220), wenn ein Stromsollwert des Motors empfangen wird, einen Koeffizienten des Terms zweiter Ordnung, einen Koeffizienten des Terms erster Ordnung und einen konstanten Term entsprechend dem Stromsollwert und einer zuvor von der vierten Berechnungseinheit (230) geschätzten Temperatur des Permanentmagneten aus den in der vierten Speichereinheit (210) gespeicherten Daten in die Gleichung eingibt,

$$E_{q.Adj} = A_e T_{mag,Est}^2 + B_e T_{mag,Est} + C_e$$

wobei $E_{q.Adj}$ die erste korrigierte Energie bezeichnet, $A_e$ den Koeffizienten des Terms zweiter Ordnung bezeichnet, $B_e$ den Koeffizienten des Terms erster Ordnung bezeichnet, $C_e$ den konstanten Term bezeichnet und $T_{mag,Est}$ die geschätzte Temperatur des Permanentmagneten bezeichnet, die zuvor von der vierten Berechnungseinheit (230) geschätzt wurde.

**7.** System nach Anspruch 6, wobei die vierte Berechnungseinheit (230) umfasst:

einen Referenzenergiegenerator (231), der dazu eingerichtet ist, eine q-Achsen-Referenzenergie entsprechend dem Stromsollwert, einem Spannungssollwert und einer in den Motor eingegebenen Winkelgeschwindigkeit zu berechnen;
eine zweite Kompensationswertspeichereinheit (232), die dazu eingerichtet ist, Daten zu Kompensationswerten der Energie-Nichtlinearität für jede DC-Eingangsspannung, Drehzahl und jedes Drehmoment des Motors zu speichern und einen Kompensationswert der Energie-Nichtlinearität entsprechend der DC-Eingangsspannung, der Drehzahl und dem Drehmoment des Motors zu berechnen;
eine zweite Kompensationsanwendungseinrichtung (233), die dazu eingerichtet ist, eine zweite korrigierte Energie durch Subtrahieren des Kompensationswerts der Energie-Nichtlinearität von der q-Achsen-Referenzenergie zu erzeugen und die erste korrigierte Energie aus der zweiten korrigierten Energie auszugeben;
einen zweiten Integralregler, der dazu eingerichtet ist, einen Ausgangswert der zweiten Kompensationsanwendungseinrichtung (233) zu empfangen und integral zu regeln; und
eine zweite Temperaturschätzeinrichtung (235), die dazu eingerichtet ist, einen Temperaturmesswert der Spule des Motors zu einem Ausgang des zweiten Integralreglers hinzuzufügen und die geschätzte Temperatur des Permanentmagneten zu berechnen.

**8.** System nach Anspruch 7, wobei die vierte Berechnungseinheit (230) ferner einen zweiten Ausgangswertbegrenzer (236) umfasst, der dazu eingerichtet ist, die geschätzte Temperatur des Permanentmagneten, die von der zweiten Temperaturschätzeinrichtung (235) ausgegeben wird, zu empfangen und zu filtern oder die geschätzte Temperatur des Permanentmagneten durch Begrenzen einer Änderungsrate der geschätzten Temperatur des Permanentmagneten zu berechnen.

**9.** System nach Anspruch 7 oder 8, wobei eine Berechnung der Daten zu Kompensationswerten der Energie-Nichtlinearität umfasst:

Berechnen einer ersten q-Achsen-Energie entsprechend dem Stromsollwert, dem Spannungssollwert und der durch einen zuvor durchgeführten Test in den Motor eingegebenen elektrischen Winkelgeschwindigkeit;

Berechnen einer zweiten q-Achsen-Energie durch Eingeben einer tatsächlich gemessenen Temperatur des Permanentmagneten in die Gleichung zweiter Ordnung und Eingeben eines Koeffizienten des Terms zweiter Ordnung, eines Koeffizienten des Terms erster Ordnung und des konstanten Terms entsprechend dem d-Achsen-Strom und dem q-Achsen-Strom entsprechend dem in den Motor eingegebenen Stromsollwert und der tatsächlich gemessenen Temperatur des Permanentmagneten aus den in der vierten Speichereinheit (210) gespeicherten Daten; und
Subtrahieren der zweiten q-Achsen-Energie von der ersten q-Achsen-Energie.

**10.** System nach einem der Ansprüche 1 bis 9, umfassend eine grundlegende Permanentmagnet-Temperaturschätzeinrichtung, die dazu eingerichtet ist, einen Temperaturmesswert einer Statorspule des Motors als die geschätzte Temperatur des Permanentmagneten zu berechnen, wenn die Drehzahl des im Motor enthaltenen Rotors niedriger ist als die Referenzdrehzahl.

## Revendications

**1.** Système d'estimation d'une température d'un aimant permanent d'un rotor d'un moteur, **caractérisé en ce que**:

une première unité de détermination configurée pour déterminer si une vitesse de rotation du rotor est supérieure ou égale à une vitesse de référence;
une deuxième unité de détermination conçue pour déterminer, lorsque la vitesse de rotation est supérieure ou égale à la vitesse de référence, une première condition, la première condition étant de savoir si un courant circulant dans une bobine se trouvant dans le moteur est inférieur à un courant de référence, et une deuxième condition, la deuxième condition étant de savoir si une amplitude d'énergie de l'axe q du moteur est inférieure à une amplitude d'énergie de référence;
une unité d'estimation de température de carte de flux magnétique (1000) conçue pour estimer la température de l'aimant permanent se trouvant dans le rotor à l'aide d'une carte de flux magnétique de l'axe d du moteur, en réponse à une ou plusieurs parmi les première et deuxième conditions remplies dans la deuxième unité de détermination; et
une unité d'estimation de température de carte d'énergie (2000) conçue pour estimer la température de l'aimant permanent à l'aide d'une carte d'énergie de l'axe q du moteur en réponse à une ou plusieurs parmi les première et deuxième conditions non remplies dans la deuxième unité de détermination,
dans lequel l'énergie de l'axe q est calculée par

$$E_q = \frac{V_{qs}I_{ds} - V_{ds}I_{qs}}{\omega_r}$$

, dans laquelle $E_q$ désigne l'énergie de l'axe q, $V_{qs}$ désigne la tension de l'axe q, $R_s$ désigne une résistance de stator, $I_{qs}$ désigne un courant de l'axe q, et $\omega_r$ désigne une vitesse angulaire électrique (rad/s).

**2.** Système selon la revendication 1, dans lequel l'unité d'estimation de température de carte de flux magnétique (1000) comprend:

une première unité de mémoire configurée pour stocker des données sur le courant de l'axe d, le courant de l'axe q et le flux magnétique de l'axe d circulant dans la bobine du moteur pour chaque température acquise lors d'un test précédemment effectué;
une deuxième unité de mémoire configurée pour traiter les données stockées dans la première unité de mémoire à l'aide d'une équation du premier ordre du flux magnétique de l'axe d par rapport à la température pour chaque courant de l'axe d et chaque courant de l'axe q, et pour calculer les données concernant un coefficient d'un terme du premier ordre et un terme constant pour chaque courant de l'axe d et chaque courant de l'axe q de l'équation du premier ordre;
une première unité de calcul (120) configurée pour calculer un premier flux magnétique corrigé à l'aide des données stockées dans la deuxième unité de mémoire et de l'équation ci-dessous; et
une deuxième unité de calcul (130) configurée pour supprimer les erreurs du premier flux magnétique corrigé et pour calculer la température estimée de l'aimant permanent, et
lorsqu'elle reçoit une valeur de commande de courant du moteur, la première unité de calcul (120) entre un coefficient du terme du premier ordre et un terme constant correspondant à la valeur de commande de courant et à une température estimée de l'aimant permanent estimée au préalable par la deuxième unité de calcul (130) parmi les données stockées dans la deuxième unité de mémoire dans l'équation,

$$A_{d.Adj} = A_d T_{mag.Est} + B_d$$

dans lequel, $A_{d,Adj}$ désigne le premier flux magnétique corrigé, $A_d$ désigne le coefficient du terme du premier ordre, $B_d$ désigne le terme constant, et $T_{mag,Est}$ désigne la température estimée de l'aimant permanent estimée au préalable par la deuxième unité de calcul (130).

**3.** Système selon la revendication 2, dans lequel la deuxième unité de calcul (130) comprend:

un générateur de flux magnétique de référence (131) configuré pour calculer un flux magnétique de référence de l'axe d en fonction de la valeur de commande de courant, d'une valeur de commande de tension et d'une vitesse angulaire électrique entrées dans le moteur;
une première unité de mémoire de valeurs de compensation (132) configurée pour stocker des données de valeurs de compensation de non-linéarité du flux magnétique pour chaque tension d'entrée CC, la vitesse de rotation et le couple du moteur, et pour calculer une valeur de compensation de non-linéarité du flux magnétique en fonction de la tension d'entrée CC, de la vitesse de rotation et du couple du moteur;
un premier applicateur de compensation (133) configuré pour générer un deuxième flux magnétique corrigé en soustrayant la valeur de compensation de non-linéarité du flux magnétique du flux magnétique de référence de l'axe d et du premier flux magnétique corrigé;
un premier régulateur intégral (134) configuré pour recevoir et réguler de manière intégrale une valeur reçue en provenance du premier applicateur de compensation (133); et
un premier estimateur de température configuré pour ajouter une valeur de température mesurée de la bobine du moteur à une sortie du premier régulateur intégral (133) et pour calculer la température estimée de l'aimant permanent.

**4.** Système selon la revendication 3, dans lequel la deuxième unité de calcul (130) comprend en outre un premier limiteur de valeur de sortie (136) configuré pour filtrer la température estimée de l'aimant permanent à partir du premier estimateur de température ou pour calculer la température estimée de l'aimant permanent en limitant une vitesse de variation de la température estimée de l'aimant permanent.

**5.** système selon la revendication 3 ou 4, dans lequel le calcul des données de valeur de compensation de non-linéarité du flux magnétique consiste à:

calculer un premier flux magnétique d'axe d en fonction de la valeur de commande de courant, de la valeur de commande de tension et de la vitesse angulaire électrique entrées dans le moteur lors d'un test effectué au préalable;
calculer un deuxième flux magnétique d'axe d en entrant une température réellement mesurée de l'aimant permanent dans l'équation du premier ordre et entrer un coefficient du terme du premier ordre et du terme constant en fonction du courant d'axe d et du courant d'axe q selon la valeur de commande de courant entrée dans le moteur et la température réellement mesurée de l'aimant permanent parmi les données stockées dans la deuxième unité de mémoire; et
soustraire le deuxième flux magnétique d'axe d du premier flux magnétique d'axe d.

**6.** Système selon l'une quelconque des revendications 1 à 5, dans lequel l'unité d'estimation de température de carte d'énergie (2000) comprend:

une troisième unité de mémoire dans laquelle les données sur le courant de l'axe d, le courant de l'axe q et l'énergie de l'axe q circulant dans la bobine du moteur pour chaque température provenant d'un test précédemment effectué;
une quatrième unité de mémoire (210) configurée pour traiter les données stockées dans la troisième unité de mémoire à l'aide d'une équation du second ordre de l'énergie de l'axe q par rapport à la température pour chaque courant de l'axe d et chaque courant de l'axe q, et pour générer et stocker les données concernant un coefficient d'un terme du second ordre, un coefficient d'un terme du premier ordre, et un terme constant pour chaque courant de l'axe d et chaque courant de l'axe q de l'équation du second ordre;
une troisième unité de calcul (220) configurée pour calculer un première valeur d'énergie corrigée à l'aide des données stockées dans la quatrième unité de mémoire (210) et de l'équation ci-dessous;
une quatrième unité de calcul (230) configurée pour supprimer les erreurs de la première valeur d'énergie corrigée et ensuite pour calculer la température estimée de l'aimant permanent, et
lorsqu'elle reçoit une valeur de commande de courant du moteur, la troisième unité de calcul (220) entre un coefficient du terme du second ordre et un coefficient du terme du premier ordre, et un terme constant correspondant à la valeur de commande de courant et une température estimée de l'aimant permanent estimée au préalable par la quatrième unité de calcul (230) parmi les données stockées dans la quatrième unité de mémoire (210) dans l'équation,

$$E_{q,Adj} = A_e T_{mag,Est}^2 + B_e T_{mag,Est} + C_e$$

dans lequel, $E_{q,Adj}$ désigne la première énergie corrigée $A_e$ désigne le coefficient du terme du second ordre, $B_e$ désigne le coefficient du terme du premier ordre, et $C_e$ désigne le terme constant, et $T_{mag,Est}$ désigne la température estimée de l'aimant permanent estimée au préalable par la quatrième unité de calcul (230).

**7.** Système selon la revendication 6, dans lequel la quatrième unité de calcul (230) comprend:

un générateur d'énergie de référence (231) configuré pour calculer une énergie de référence de l'axe q en fonction de la valeur de commande de courant, d'une valeur de commande de tension et d'une vitesse entrées dans le moteur;
une deuxième mémoire de valeurs de compensation (232) configurée pour stocker des données de valeurs de compensation de non-linéarité d'énergie pour chaque tension d'entrée CC, la vitesse de rotation, et le couple du moteur, et pour calculer une valeur de compensation de non-linéarité d'énergie en fonction de la tension d'entrée CC, de la vitesse de rotation et du couple du moteur;
un deuxième applicateur de compensation (233) configuré pour générer une deuxième énergie corrigée en soustrayant la valeur de compensation de non-linéarité d'énergie de l'énergie de référence de l'axe q et pour produire la première énergie corrigée à partir de la deuxième énergie corrigée;
un deuxième régulateur intégral configuré pour recevoir et réguler de manière intégrale une valeur de sortie du deuxième applicateur de compensation (233); et
un deuxième estimateur de température (235) configuré pour ajouter une valeur de température mesurée de la bobine du moteur à une sortie du deuxième régulateur intégral et pour calculer la température estimée de l'aimant permanent.

**8.** Système selon la revendication 7, dans lequel la quatrième unité de calcul (230) comprend en outre un deuxième limiteur de valeur de sortie (236) configuré pour recevoir et filtrer la température estimée de l'aimant permanent délivré par le deuxième estimateur de température (235) ou pour calculer la température estimée de l'aimant permanent en limitant une vitesse de variation de la température estimée de l'aimant permanent.

**9.** Système selon la revendication 7 ou 8, dans lequel le calcul des données de valeur de compensation de non-linéarité d'énergie consiste à:

calculer une première énergie d'axe q en fonction de la valeur de commande de courant, de la valeur de commande de tension et de la vitesse angulaire électrique entrées dans le moteur lors d'un test effectué au préalable;
calculer une deuxième énergie d'axe q en entrant une température réellement mesurée de l'aimant permanent dans l'équation du second ordre et entrer un coefficient du terme du second ordre et un coefficient du terme du premier ordre, et le terme constant en fonction du courant d'axe d et du courant d'axe q selon la valeur de commande de courant entrée dans le moteur et la température réellement mesurée de l'aimant permanent parmi les données stockées dans la quatrième unité de mémoire (210); et
soustraire la deuxième énergie d'axe q de la première énergie d'axe q.

**10.** Système selon l'une quelconque des revendications 1 à 9, comprenant un estimateur de température de base d'aimant permanent configuré pour calculer une valeur de température mesurée d'une bobine de stator du moteur comme température estimée de l'aimant permanent lorsque la vitesse de rotation du rotor se trouvant dans le moteur est inférieure à la vitesse de référence.

FIG. 1

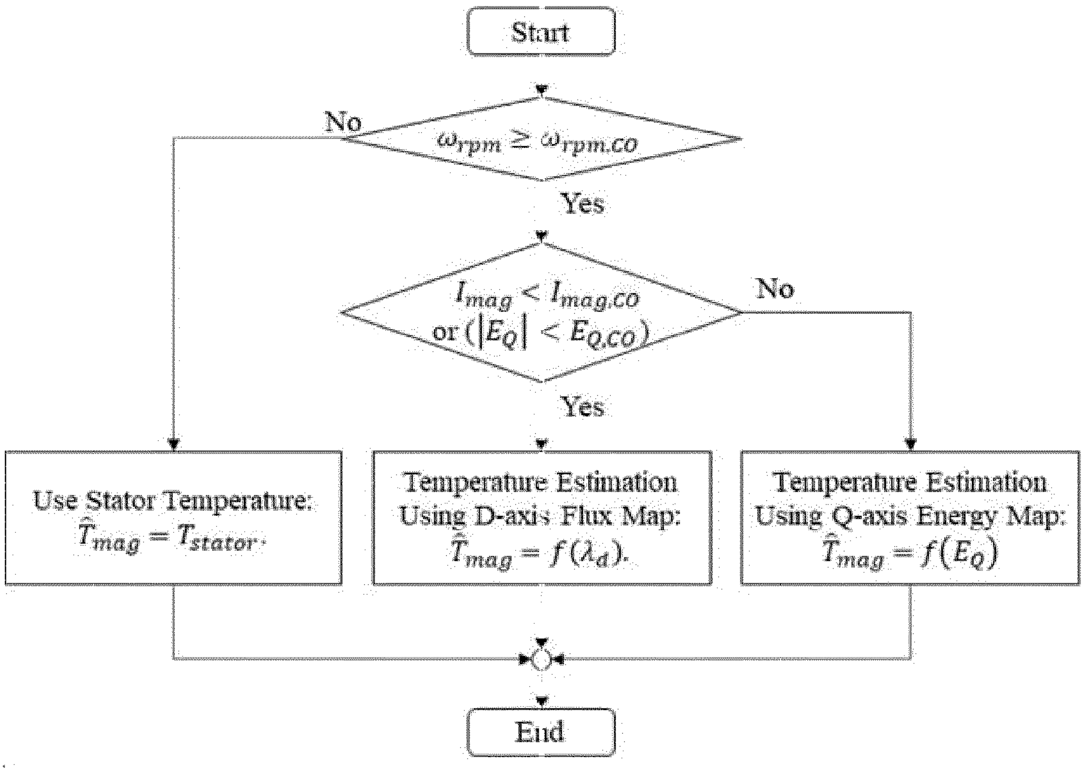
Start
No
$\omega_{rpm} \geq \omega_{rpm,CO}$
Yes
$I_{mag} < I_{mag,CO}$
or $(|E_Q| < E_{Q,CO})$
No
Yes
Use Stator Temperature:
$\hat{T}_{mag} = T_{stator}$.
Temperature Estimation
Using D-axis Flux Map:
$\hat{T}_{mag} = f(\lambda_d)$.
Temperature Estimation
Using Q-axis Energy Map:
$\hat{T}_{mag} = f(E_Q)$
End

FIG. 2

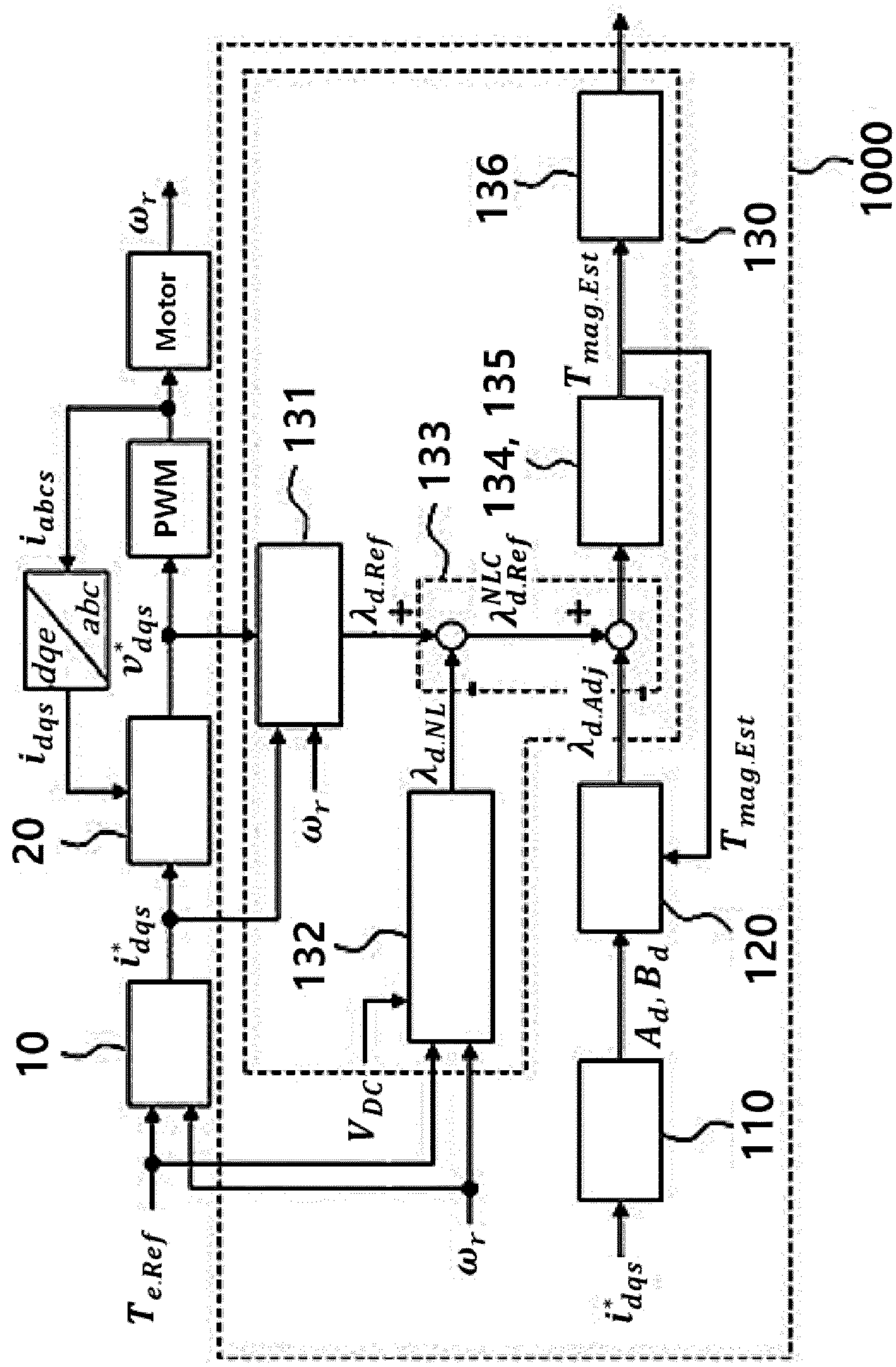

FIG. 3

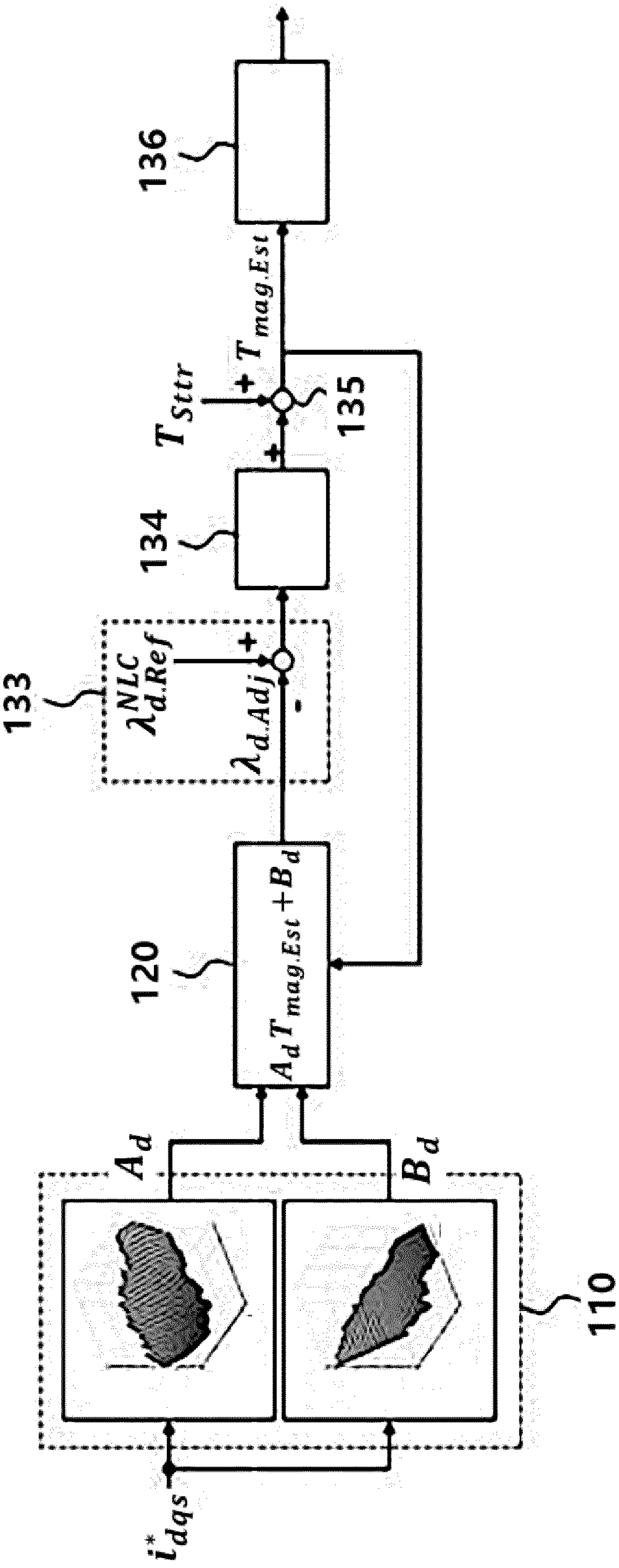
$i_{dqs}^{*}$
$A_d$
$B_d$
110
120
$A_d T_{mag.Est} + B_d$
133
$\lambda_{d.Ref}^{NLC}$
$\lambda_{d.Adj}$
+
-
134
$T_{Sttr}$
+
+
135
$T_{mag.Est}$
136

FIG. 4

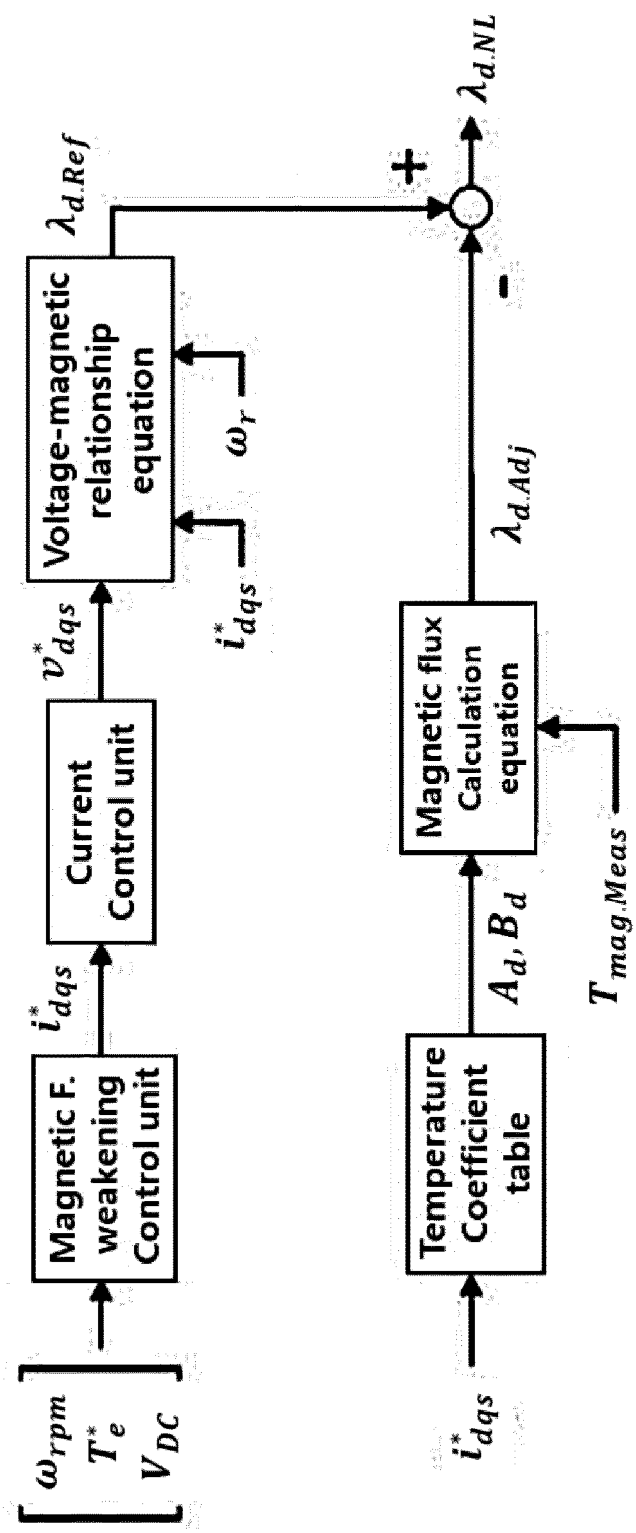
$\omega_{rpm}$
$T_e^*$
$V_{DC}$
Magnetic F. weakening Control unit
$i_{dqs}^*$
Current Control unit
$v_{dqs}^*$
Voltage-magnetic relationship equation
$i_{dqs}^*$
$\omega_r$
$\lambda_{d.Ref}$
+
-
$\lambda_{d.NL}$
$i_{dqs}^*$
Temperature Coefficient table
$A_d, B_d$
Magnetic flux Calculation equation
$T_{mag.Meas}$
$\lambda_{d.Adj}$

FIG. 5

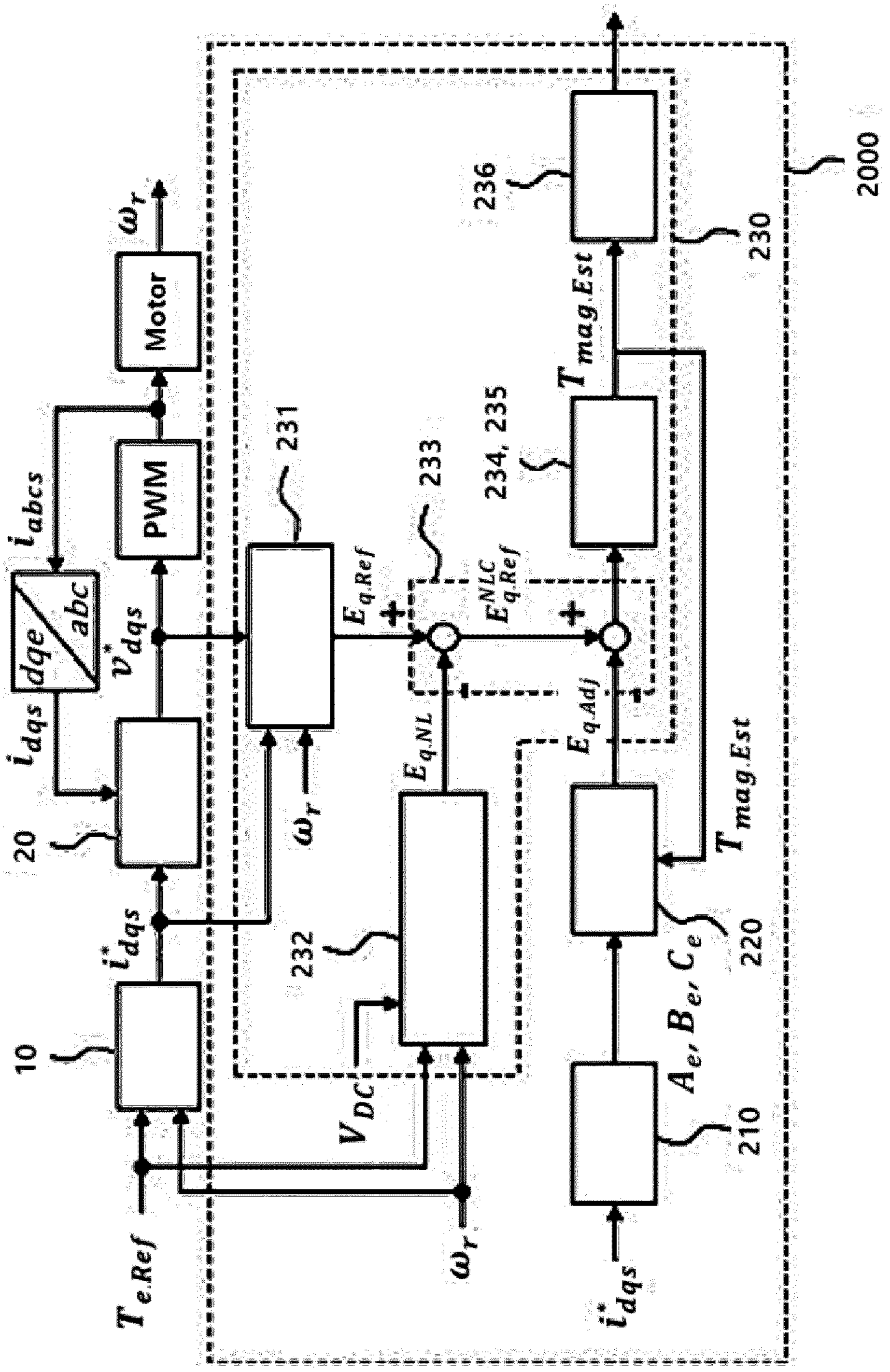
$T_{e.Ref}$
10
$i^*_{dqs}$
20
$i_{dqs}$
dqe
abc
$i_{abcs}$
$v^*_{dqs}$
PWM
Motor
$\omega_r$
231
$E_{q.Ref}$
233
$E^{NLC}_{q.Ref}$
232
$V_{DC}$
$E_{q.NL}$
$E_{q.Adj}$
234, 235
$T_{mag.Est}$
236
230
2000
210
$A_e, B_e, C_e$
220

FIG. 6

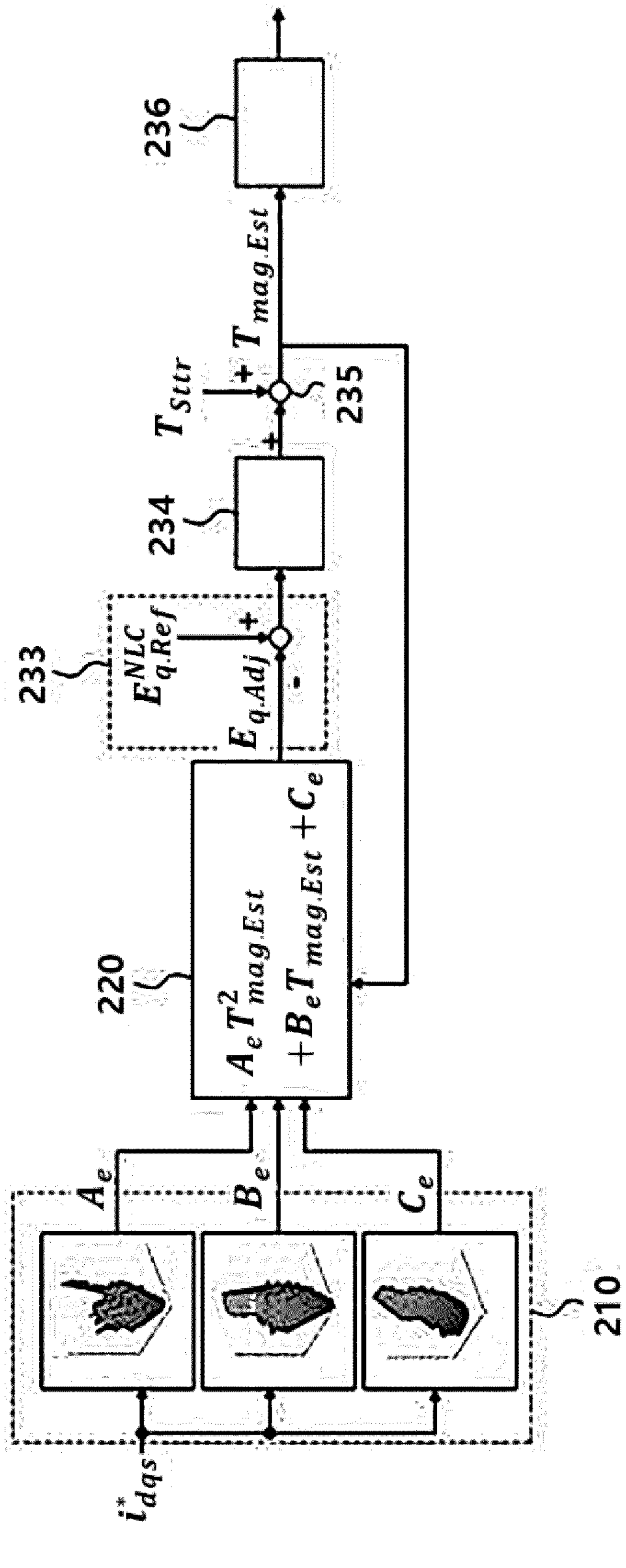
236
234
233
235
220
210
$T_{Sttr}$
$T_{mag.Est}$
$E^{NLC}_{q.Ref}$
$E_{q.Adj}$
$A_e T^2_{mag.Est}$
$+B_e T_{mag.Est} + C_e$
$A_e$
$B_e$
$C_e$
$i^*_{dqs}$
+
+
+
-

FIG. 7

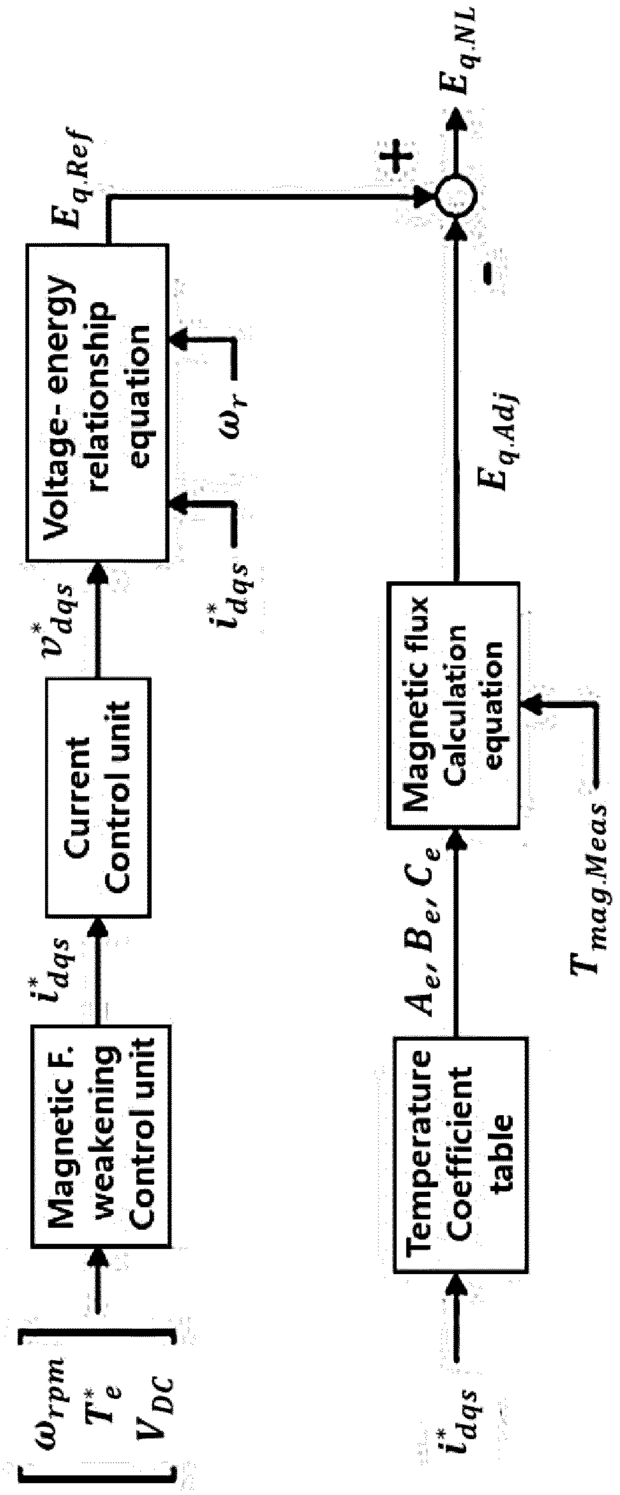

$\omega_{rpm}$
$T_e^*$
$V_{DC}$
Magnetic F. weakening Control unit
$i_{dqs}^*$
Current Control unit
$v_{dqs}^*$
Voltage- energy relationship equation
$i_{dqs}^*$
$\omega_r$
$E_{q.Ref}$
+
-
$E_{q.NL}$
$i_{dqs}^*$
Temperature Coefficient table
$A_e, B_e, C_e$
Magnetic flux Calculation equation
$T_{mag.Meas}$
$E_{q.Adj}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006254521 A
- JP 2022182027 A